# EUROPÄISCHE PATENTSCHRIFT

(11) **EP 0 609 652 B1**
(45) Veröffentlichungstag und Bekanntmachung des Hinweises auf die Patenterteilung: **27.08.1997**
(21) Anmeldenummer: 94100082.0
(22) Anmeldetag: 05.01.1994
(51) Int. Cl.: F24H 1/28, F24H 9/06, F24H 8/00

(54) **Gas-Wandheizkessel**
Wall-mounted boiler
Chaudière murale

(30) Priorität: 23.01.1993 DE 4301804
(43) Veröffentlichungstag der Anmeldung: 10.08.1994
(73) Patentinhaber: VIESSMANN WERKE GmbH & CO., 35107 Allendorf/Eder (DE)
(72) Erfinder: Schmitz, Heribert, D-35619 Braunfels (DE); Debus, Dietmar, D-35282 Rauschenberg (DE)
(74) Vertreter: Wolf, Günter, Dipl.-Ing.

(56) Entgegenhaltungen:
- DE-U- 8 601 896
- DE-U- 8 903 020
- FR-A- 1 581 121

## Beschreibung

Die Erfindung betrifft einen Gas-Wandheizkessel, bestehend aus einer Brennkammer, von der aus ein mindestens aus einer Tasche gebildeter Heizgaszug in einem wasserführenden, mit Vor- und Rücklaufanschlüssen versehenen Gehäuse zu einer unter dem Gehäuse angeordneten Abgassammelkammer mit Abgas- und Kondensatabflußanschlüssen geführt ist.

Derartige Gas-Wandheizkessel sind bspw. nach dem DE-U 89 03 020 bekannt. Bei diesem Heizkessel, der auch als sogenannter Brennwertkessel betrieben werden kann, ist das übliche Bauprinzip von im wesentlichen horizontal orientierten Heizkesseln eingehalten, d.h., Brenner, Brennkammer, Heizgaszüge und Abgassammelkammer sind hintereinander angeordnet und beanspruchen insofern relativ viel Raumtiefe. Der Herstellungsaufwand für einen solchen Heizkessel ist außerdem beträchtlich. Dies gilt auch für Heizkessel nach dem DE-U 86 01 896 und dem DE-U-89 03 023, die für eine Wandinstallation weder vorgesehen noch aufgrund seines winkelförmigen Gesamtgehäuses geeignet ist.
Ausgehend von einem Gas-Wandheizkessel der gattungsgemäßen Art liegt der Erfindung die Aufgabe zugrunde, dieses Bauprinzip in einen Heizkessel umzusetzen, der einen möglichst geringen Herstellungsaufwand und automatisierte Fertigung zulassende, sich zur Installationsfläche extrem flach erstreckende Bauweise haben soll.
Diese Aufgabe ist mit einem Gas-Wandheizkessel der eingangs genannten Art nach der Erfindung durch die im Kennzeichen des Anspruches 1 angeführten Merkmale gelöst. Vorteilhafte Ausgestaltungen ergeben sich nach den Unteransprüchen.
Die extrem flache und kompakte Bauweise wird hierbei also dadurch erreicht, daß sich die in bekannter Weise aus Taschen gebildeten Heizgaszüge parallel zur breiten Wandbefestigungsfläche des Gehäuses erstrecken und daß die ebenfalls wassergekühlte Brennkammer in Draufsichtsprojektion gesehen und im Horizontalquerschnitt nicht bzw. im wesentlichen nicht viel mehr Querschnittsfläche beansprucht als das Gehäuse, das im Querschnitt flachrechteckförmig ausgebildet ist und dessen schmale Seitenflächen in ihrer Breite maximal der halben Breite der beiden anderen Flächen entsprechen. Mit Rücksicht auf die angestrebte und gegebene Flachbauweise ist dabei vorteilhaft der in die Brennereinsatzöffnung eingesetzte Brenner in Abhängigkeit von der Form der inneren Brennkammerschale ein Metallgewebeflächenbrenner mit Halbkugel- oder Halbellipsoidform oder einer dieser Form angenähert entsprechenden Form.

Da sich die Brennereinsatzöffnung in oder angenähert in der Ebene der sich parallel zur Wandbefestigungsfläche erstreckenden, entsprechend breiten Gehäusewandfläche erstreckt, wird also diese Ebene bzw. die Vorderwandfläche des Gehäuses lediglich vom Brennergebläse bzw. der Gas-Luftgemischzuleitung überragt, was noch näher erläutert wird.

Für eine möglichst einfache und eine automatisierte Fertigung zulassende Herstellung hat sich eine Ausgestaltung dahingehend als besonders vorteilhaft erwiesen, daß das wasserführende Gehäuse einschließlich der Brennkammer aus vier Bauteilen gebildet ist, nämlich aus einer Rückwandschale, einer Vorderwandschale und aus einer inneren, topfartigen Brennkammerschale, die in eine Öffnung der Vorderwandschale eingesetzt und die mit Anschlußöffnungen für die Taschen versehen ist, welche Taschen am unteren Ende in die eine das vierte Bauteil bildende Bodenschale eingebunden sind, an der die Abgassammelkammer angesetzt ist.

Das Gehäuse ließe sich zwar auch so ausbilden, daß es aus einer die Rückwand und die beiden Seitenwände bildenden Schale besteht, die nach vorn mit einem im wesentlichen ebenflächigen Blech abgedeckelt wird, um aber die eine oder andere der Rück- und Vorderwandschalen nicht extrem tief ausformen zu müssen, sind die Rückwand- und die Vorderwandschale längs einer vertikalen Gehäusemittelebene miteinander flüssigkeitsdicht verbunden, d.h., diese Schalen haben jeweils eine Tiefe, die etwa der halben Tiefe des Gehäuses entspricht.

Was das Gehäuse einerseits und die Heizgaszüge bzw. Taschen betrifft, so sind unterschiedliche Werkstoffkombinationen möglich, nämlich bspw. Stahl/Edelstahl, Stahl/Aluminium, Edelstahl/Aluminium.

Weitere vorteilhafte Ausgestaltungen bestehen in Folgendem:
Die Rückwand- und die Vorderwandschale sind im Erstreckungsbereich der Taschen mit Versteifungsprägungen versehen, wobei mindestens in den horizontal erstreckten Versteifungsprägungen Wandstützelemente angeordnet sein können.

Ferner können die Rückwand- und die Vorderwandschale mit in der Mittelebene flüssigkeitsdicht aneinanderliegenden Lappenfortsätzen versehen und in diesen Leitungs- und Gehäusehohlräume umschließende Prägungen mit Anschlußöffnungen angeordnet sein. Dadurch können unmittelbar am Kesselgehäuse Zubehörteile, wie Pumpen, Sicherheitsventile od. dgl. direkt angebracht werden, und sonst dafür erforderliche Leitungen oder Leitungsstücke werden entbehrlich.

Der erfindungsgemäße Gas-Wandheizkessel wird nachfolgend anhand der zeichnerischen Darstellung von Ausführungsbeispielen näher erläutert.

Es zeigt schematisch
- Fig. 1: eine Vorderansicht des Gas-Wandheizkessels;
- Fig. 2: einen Längsschnitt durch den Heizkessel längs Linie II-II in Fig. 1;
- Fig. 3: einen Querschnitt durch den Heizkessel längs Linie III-III in Fig. 1;
- Fig. 4: eine Vorderansicht des Kesselgehäuses in etwas anderer Ausführungsform;
- Fig. 5: einen Längsschnitt durch das Gehäuse längs Linie V-V in Fig. 4 und
- Fig. 6: einen Querschnitt längs Linie VI-VI durch die Ausführungsform gemäß Fig. 4, 5.

Der Gas-Wandheizkessel besteht aus einer Brennkammer 1, von der aus ein aus mindestens einer Tasche 2' gebildeter Heizgaszug 2 in einem wasserführenden, mit Vor- und Rücklaufanschlüssen 21, 22 versehenen Gehäuse 3 zu einer unter dem Gehäuse 3 angeordneten Abgassammelkammer 4 mit Abgas- und Kondensatabflußanschlüssen 23, 23', geführt ist. Für einen solchen Gas-Wandheizkessel, und dies gilt für beide Ausführungsformen, ist nun wesentlich, daß der im flach kastenförmig ausgebildeten Gehäuse 3 erstreckte, taschenförmige Heizgaszug 2 parallel zur breiten Wandbefestigungsfläche (WS) des Gehäuses 3 angeordnet ist, wobei die über dem Gehäuse 3 in einem wasserführenden Raum, der mit dem wasserführenden Innenraum I des Gehäuses 3 in Verbindung steht, angeordnete Brennkammer 1 in Draufsichtsprojektion im wesentlichen dem flach-rechteckigen Querschnitt des Gehäuses 3 entspricht und die Brennereinsatzöffnung 5 der Brennkammer 1 in oder angenähert in der Ebene E der sich parallel zur Wandbefestigungsfläche WS erstreckenden, entsprechend breiten Gehäusewandfläche GS angeordnet ist.

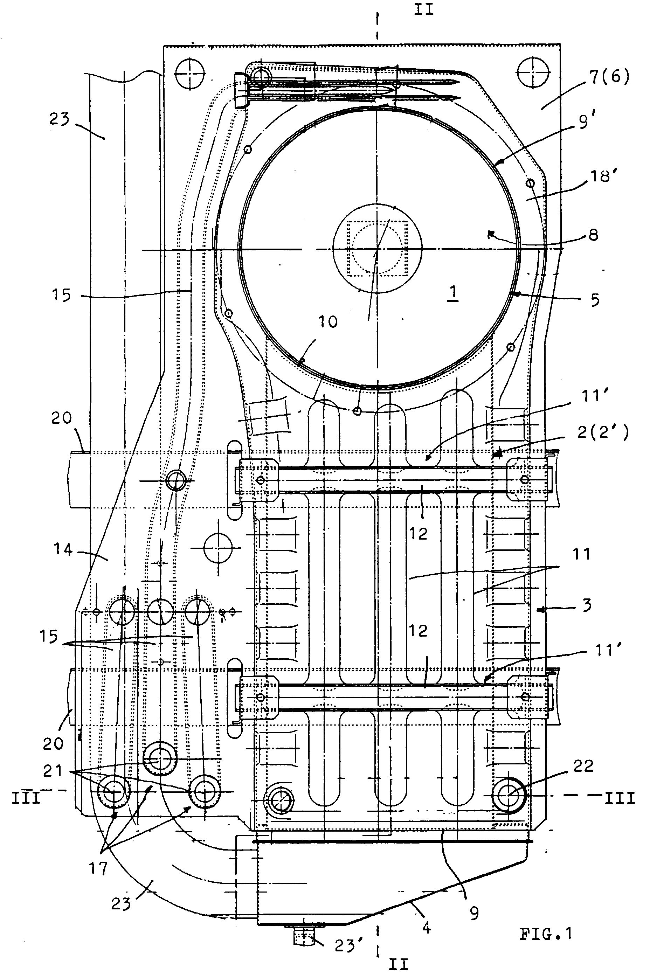

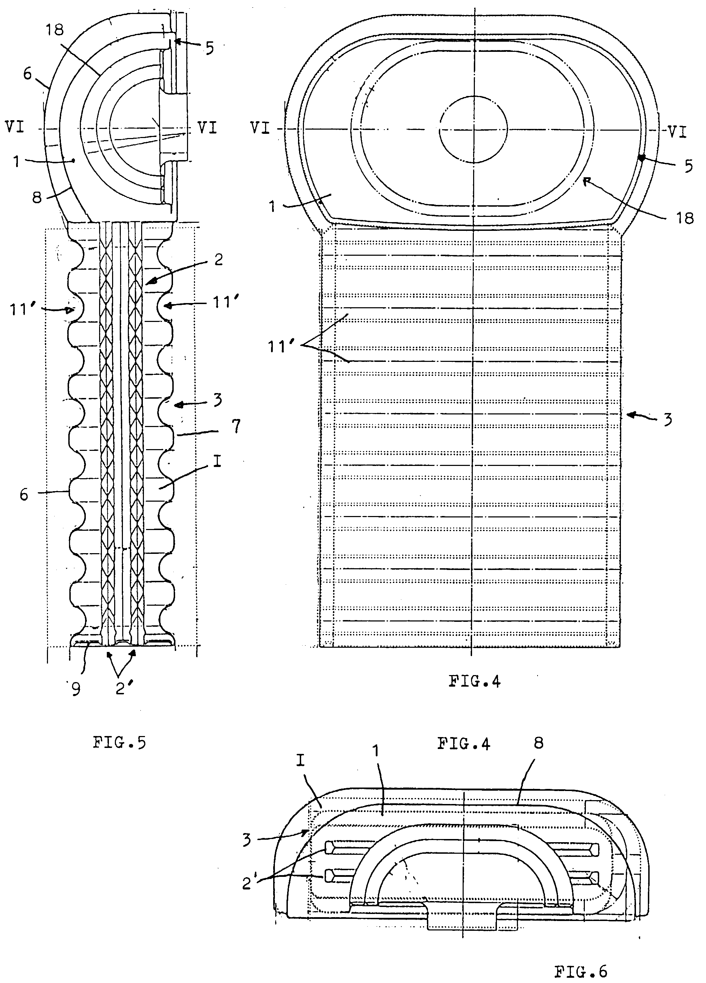

Beiden Ausführungsformen nach den Fig. 1-3 und Fig. 4-6 ist ebenfalls gemeinsam, daß das wasserführende Gehäuse 3 einschließlich der Brennkammer 1 aus vier Bauteilen gebildet ist, nämlich aus der Rückwandschale 6, der Vorderwandschale 7 und aus der inneren, topfartigen Brennkammerschale 8, die in eine Öffnung 9' der Vorderwandschale 7 eingesetzt und die mit Anschlußöffnungen 10 für die Taschen 2' versehen ist, welche Taschen 2' am unteren Ende in die das vierte Bauteile bildende Bodenschale 9 eingebunden sind, an der die Abgassammelkammer 4 angesetzt ist. Die Rück- und Vorderwandschalen 6, 7 können dabei aus Stahlblech ausgebildet sein, während die anderen, gasführende Räume begrenzenden Wände entweder aus kondensatfestem Material wie Edelstahl (Brennwertbetrieb) oder doppellagig (Niedertemperaturbetrieb) ausgebildet sein können.

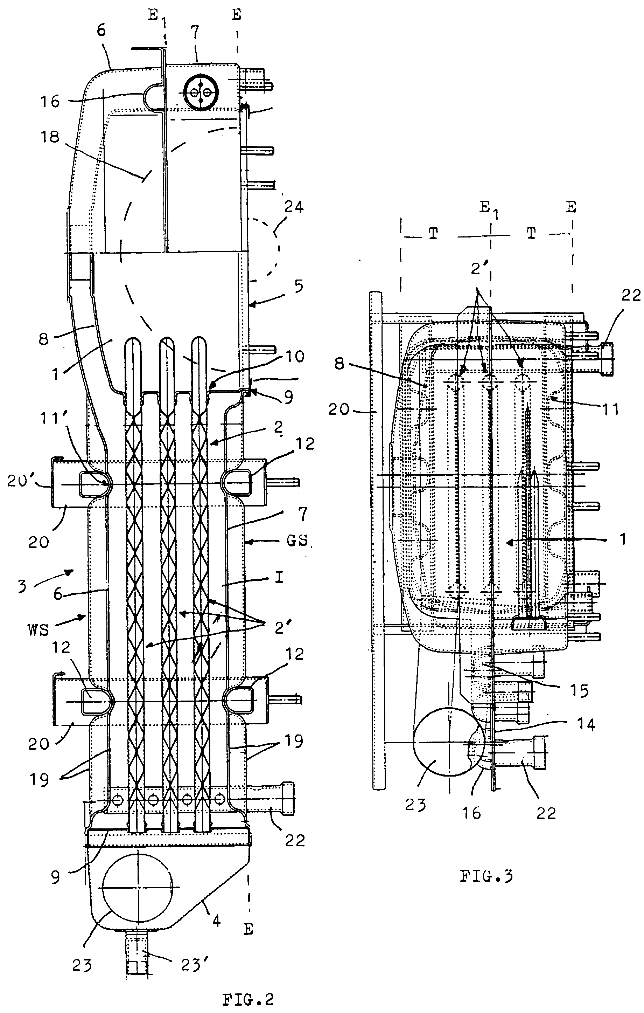

Die Rückwand- und die Vorderwandschale 6, 7 sind dabei längs einer vertikalen Mittelebene E₁ des Gehäuses 3 miteinander flüssigkeitsdicht verbunden, d.h., die beiden Rück- und Vorderwandschalen 6, 7 haben in etwa die gleiche Tiefe T, wie dies insbesondere aus Fig. 3 deutlich wird.

Beim Ausführungsbeispiel nach Fig. 1-3 sind die Rückwand- und die Vorderwandschale 6, 7 im Erstreckungsbereich der Taschen 2' mit Versteifungsprägungen 11 versehen, wobei in den horizontal erstreckten Versteifungsprägungen 11' Wandstützelemente 12 angeordnet sind.

Die Schalenbauweise des Gehäuses 3 ermöglicht es, die Rückwand- und die Vorderwandschale 6, 7 mit in der Mittelebene E₁ flüssigkeitsdicht aneinanderliegenden Lappenfortsätzen 14 zu versehen und in diesen Leitungs- und Gehäusehohlräume 15 umschließende Prägungen 16 mit Vorlaufanschlußöffnungen 17 anzuordnen, wie dies aus Fig. 1, 3 ersichtlich ist, so daß dort bspw. Heiz- und Brauchwasser- bzw. nur Heizungsumwälzpumpe, Ventile u. dgl. Kesselzubehör direkt angeschlossen werden können.

Der in die Brennereinsatzöffnung 5 eingesetzte und nach außen keinen Raum beanspruchende Gebläse-Brenner 18 ist in Abhängigkeit von der Form der inneren Brennkammerschale 8 ein Metallgewebeflächenbrenner mit Halbkugel- oder Halbellipsoid- oder einer dieser Form angenähert entsprechenden Form.

Dieser Gebläse-Brenner 18 ist an einem Flansch 18' der Brennereinsatzöffnung 5 gasdicht angesetzt, so daß das Gebläse die erforderliche Luft direkt aus dem Aufstellraum oder von außen ansaugen kann, was bedeutet, daß ein zusätzlicher Luftkasten, wie er bei solchen Heizkesseln üblich ist, entbehrlich wird.

Um den, wie aus Fig. 2 und 5 ersichtlich, extrem flach ausgebildeten Heizkessel an einer Wand befestigen zu können, sind Wandbefestigungselemente 20 in Form von Einhängelaschen 20' angeordnet, welche Laschen bspw. auch Teile der Wandstützelemente 12 sein können.

Das Gebläse (nicht dargestellt) für den Gebläse-Brenner 18 kann, muß aber nicht direkt mittig vor dem Brenner und damit vor der Ebene E angeordnet werden, sondern es ist auch möglich, um konsequent auch insofern der Flachbauweise zu genügen, das Gebläse seitlich neben dem Brennkammerbereich anzuordnen und das Gas/Luftgemisch über eine räumlich wenig auftragende Zuleitung 24, wie in Fig. 2 gestrichelt angedeutet, zuzuführen.

Das ganze Gehäuse 3, also einschließlich des wasserführenden Brennkammerteiles ist - wie üblich - mit einem Wärmeschutz und einem Außengehäuse umgeben, was nicht dargestellt ist.

Ohne die Kesselkonstruktion und damit die automatischen Fertigungshilfsmittel ändern zu müssen, können für die Heizgaszüge 2 je nach gewünschter Betriebsart (Brennwertbetrieb/Niedertemperaturbetrieb) unter Beibehaltung der Taschenabmessungen Taschen 2' unterschiedlicher Wandstruktur eingeschweißt werden. Dargestellt sind in den Fig. 1 bis 6, drei bzw. zwei Taschen aus Edelstahlblech, deren Wände zwecks Wärmetauschflächenvergrößerung mit sich kreuzenden Wellenprägungen versehen sind.

In Rücksicht auf die vollautomatische Fertigung aber auch die Wandinstallation sind die wasserführenden Anschlüsse kesselvorderseitig angeordnet.

Die aus kondensatfestem Material gebildete Abgassammelkammer 4 ist als vorgefertigter Kasten, wie aus Fig. 1, 2 ersichtlich, unten in geeigneter Weise an das Gehäuse 3 angesetzt und weist für Brennwertbetriebsweise einen Kondensatanschluß 23' auf. Der Abgasanschluß 23 erstreckt sich von der Abgassammelkammer 4 aus zur Seite und nach oben (siehe Fig. 1, 3).

## Patentansprüche

1. Gas-Wandheizkessel, bestehend aus einer Brennkammer (1), von der aus ein aus mindestens einer Tasche (2') gebildeter Heizgaszug (2) in einem wasserführenden, mit Vor- und Rücklaufanschlüssen (21, 22) versehenen Gehäuse (3) zu einer unter dem Gehäuse (3) angeordneten Abgassammelkammer (4) mit Abgas- und Kondensatabflußanschlüssen (23, 23') geführt ist,
**dadurch gekennzeichnet,**
daß der im flach kastenförmig ausgebildeten Gehäuse (3) erstreckte, taschenförmige Heizgaszug (2) parallel zur breiten Wandbefestigungsfläche (WS) des Gehäuses (3) angeordnet ist, wobei die über dem Gehäuse (3) in einem wasserführenden Raum, der mit dem wasserführenden Innenraum (I) des Gehäuses (3) in Verbindung steht, angeordnete Brennkammer (1) in Draufsichtsprojektion im wesentlichen dem flach-rechteckigen Querschnitt des Gehäuses (3) entspricht und die Brennereinsatzöffnung (5) der Brennkammer (1) in oder angenähert in der Ebene (E) der sich parallel zur Wandbefestigungsfläche (WS) erstreckenden, entsprechend breiten Gehäusewandfläche (GS) angeordnet ist.

2. Heizkessel nach einem der Anspruch 1,
**dadurch gekennzeichnet,**
daß der in die Brennereinsatzöffnung (5) eingesetzte Gebläsebrenner (18) in Abhängigkeit von der Form der inneren Brennkammerschale (8) ein Metallgewebeflächenbrenner mit Halbkugel- oder Halbellipsoid- oder einer dieser Form angenähert entsprechenden Form ist.

3. Heizkessel nach Anspruch 1 oder 2,
**dadurch gekennzeichnet,**
daß das wasserführende Gehäuse (3) einschließlich der Brennkammer (1) aus vier Bauteilen gebildet ist, nämlich aus einer Rückwandschale (6), einer Vorderwandschale (7) und aus einer inneren, topfartigen Brennkammerschale (8), die in eine Öffnung (9') der Vorderwandschale (7) eingesetzt und die mit Anschlußöffnungen (10) für die Taschen (2') versehen ist, welche am unteren Ende in die eine das vierte Bauteil bildende Bodenschale (9) eingebunden sind, an der die Abgassammelkammer (4) angesetzt ist.

4. Heizkessel nach Anspruch 3,
**dadurch gekennzeichnet,**
daß die Rückwand- und die Vorderwandschale (6, 7) längs einer vertikalen Gehäusemittelebene (E₁) miteinander flüssigkeitsdicht verbunden sind.

5. Heizkessel nach Anspruch 3 oder 4,
**dadurch gekennzeichnet,**
daß die Rückwand- und die Vorderwandschale (6, 7) im Erstreckungsbereich der Taschen (2') mit Versteifungsprägungen (11) versehen sind.

6. Heizkessel nach Anspruch 5,
**dadurch gekennzeichnet,**
daß mindestens in den horizontal erstreckten Versteifungsprägungen (11') Wandstützelemente (12) angeordnet sind.

7. Heizkessel nach einem der Ansprüche 3 bis 6,
**dadurch gekennzeichnet,**
daß die Rückwand- und die Vorderwandschale (6, 7) mit in der Mittelebene (E₁) flüssigkeitsdicht aneinanderliegenden Lappenfortsätzen (14) versehen und in diesen Leitungs- und Gehäusehohlräume (15) umschließende Prägungen (16) mit Vorlaufanschlußöffnungen (17) angeordnet sind.

8. Heizkessel nach Anspruch 2,
**dadurch gekennzeichnet,**
daß der Brenner (18) gasdicht an der Brennereinsatzöffnung (6) angeschlossen ist.

9. Heizkessel nach einem der Ansprüche 3 bis 8,
**dadurch gekennzeichnet,**
daß an der Rückwandschale (6) Wandbefestigungselemente (20) in Form von Einhängelaschen (20') angeordnet sind.

10. Heizkessel nach einem der Ansprüche 1 bis 9,
**dadurch gekennzeichnet,**
daß die Taschen (2') aus kondensatfestem Material wie Edelstahl gebildet sind.

11. Heizkessel nach einem der Ansprüche 1 bis 9,
**dadurch gekennzeichnet,**
daß die Wände der Taschen (2') doppellagig ausgebildet sind.

12. Heizkessel nach einem der Ansprüche 1 bis 11,
**dadurch gekennzeichnet,**
daß die den wasserführenden Innenraum (I) nach außen begrenzenden Gehäusewände (19) aus Stahlblech gebildet sind.

13. Heizkessel nach einem der Ansprüche 1 bis 12,
**dadurch gekennzeichnet,**
daß die wasserführenden Vor- und Rücklaufanschlüsse (21, 22) kesselvorderseitig angeordnet sind.

## Claims

1. A wall-mounted gas boiler comprising a combustion chamber (1) from which a heating flue (2) formed of at least one pocket (2') is guided within a water-carrying casing (3) provided with forward and return flow connections (21,22) to an exhaust gas collecting chamber (4) arranged underneath the casing (3) and having connections (23,23') for the exhaust gas and condensate discharge, characterised in that the pocket-type heating gas flue (2) extending within the flat box-type casing (3) is arranged in parallel to the broad wall-mounted face (WS) of the casing (3), with the combustion chamber (1) arranged above the casing (3) within a water-carrying space in communication with the water-carrying interior (I) of the casing (3), in plan view, substantially corresponding to the flat-rectangular cross-section of the casing (3), and with the burner insert opening (5) of the combustion chamber (1) being arranged within or approximately within the plane (E) of the housing wall face (GS) of a corresponding width extending in parallel to the wall mounted face (WS).

2. A boiler according to claim 1, characterised in that the blowpipe (18) inserted into the burner insert opening (5), in response to the shape of the inner combustion chamber shell (8) is a metal fabric surface burner of a semi-spherical or semi-ellipsoid configuration or of a shape approximately corresponding thereto.

3. A boiler according to claims 1 or 2, characterised in that the water-carrying casing (3) inclusive of the combustion chamber (1) is formed of four components, namely of a rear wall shell (6), a front wall shell (7) and of an inner, pot-shaped combustion chamber shell (8) inserted into an opening (9') ofthe front wall shell (7) and provided with connecting openings (10) for the pockets (2') integrated at the bottom end into the bottom shell (9) forming the fourth component on which is mounted the exhaust gas collecting chamber (4).

4. A boiler according to claim 3, characterised in that the rear wall and front wall shells (6,7) are in liquid-tight communication along a vertical central plane (E₁) of the casing.

5. A boiler according to claims 3 or 4, characterised in that the rear wall and front wall shells (6,7) in the pocket (2') extension area are provided with reinforcing bosses (11).

6. A boiler to claim 5, characterised in that wall supporting elements (12) are arranged in the horizontally extending reinforcing bosses (11').

7. A boiler according to any one of claims 3 to 6, characterised in that the rear wall and front wall shells (6,7) are provided with flanged extensions (14) in liquid-tight abutment along the central plane (E₁) and that bosses (16) with connecting openings (17) for the forward flow enclosing conduit and casing cavities (15) are arranged therein.

8. A boiler according to claim 2, characterised in that the burner (18) is connected to the burner insert opening (5) in gas-tight manner.

9. A boiler according to any one of claims 3 to 8, characterised in that wall-mounted elements (20) are arranged on the rear wall shell (6) in the form of hook-in tongues (20').

10. A boiler according to any one of claims 1 to 9, characterised in that the pockets (2') are made of condensate-resistant material, such as stainless steel.

11. A boiler according to any one of claims 1 to 9, characterised in that the walls of the pockets (2') are of a dual-layer configuration.

12. A boiler according to any one of claims 1 to 11, characterised in that the casing walls (19) externally confining the water-carrying interior (I) are made of steel sheet.

13. A boiler according to claims 1 to 12, characterised in that the water-carrying forward and return-flow connections (21,22) are arranged at the front side of the boiler.

## Revendications

1. Chaudière de chauffage murale au gaz constituée par une chambre de combustion (1) à partir de laquelle un carneau de gaz de chauffage (2), formé par au moins une poche (2'), est mené dans un bâti conducteur d'eau (3) pourvu de raccords aller et retour (21, 22) vers un collecteur de gaz perdu (4) placé sous le bâti (3) avec des raccords d'évacuation de gaz perdu et de produit de condensation (23, 23'),
**caractérisée en ce**
que le carneau de gaz de chauffage (2) en forme de poche, étendu dans le bâti (3) configuré en forme de boîte plate, est placé parallèlement à la surface large de fixation au mur (WS) du bâti (3), la chambre de combustion (1) placée au-dessus du bâti (3) dans un espace conducteur d'eau, qui est en relation avec l'espace intérieur conducteur d'eau (I) du bâti (3) correspondant en projection en vue de dessus essentiellement à la section rectangulaire plate du bâti (3) et l'ouverture de l'insert du brûleur (5) de la chambre de combustion (1) étant placée dans ou approximativement dans le plan (E) de la surface de la paroi du bâti (GS) adéquatement large qui s'étend parallèlement à la surface de fixation au mur (WS).

2. Chaudière de chauffage selon la revendication 1,
**caractérisée en ce**
que le brûleur à soufflante (18) mis en place dans l'ouverture de l'insert du brûleur (5) est, en fonction de la forme de la coque intérieure de la chambre de combustion (8) un brûleur en surface en tissu métallique avec une forme d'hémisphère ou hémi-ellipsoïdale ou une forme correspondante approximativement à cette forme.

3. Chaudière de chauffage selon la revendication 1 ou 2,
**caractérisée en ce**
que le bâti conducteur d'eau (3) est formé, chambre de combustion (1) comprise, par quatre composants, à savoir par une coque de paroi arrière (6), une coque de paroi avant (7) et par une coque de chambre de combustion (8) intérieure en forme de pot qui est mise en place dans une ouverture (9') de la coque de paroi avant (7) et qui est pourvue d'ouvertures de raccord (10) pour les poches (2') qui sont intégrées à l'extrémité inférieure dans la coque de fond (9), qui forme le quatrième composant, à laquelle est rattaché le collecteur de gaz perdu (4).

4. Chaudière de chauffage selon la revendication 3,
**caractérisée en ce**
que la coque de paroi arrière et la coque de paroi avant (6, 7) sont reliées le long d'un plan médian vertical du bâti (E₁) l'une à l'autre en étant étanches au liquide.

5. Chaudière de chauffage selon la revendication 3 ou 4,
**caractérisée en ce**
que la coque de paroi arrière et la coque de paroi avant (6, 7) sont pourvues dans la zone de l'extension des poches (2') d'estampages de renforcement (11).

6. Chaudière de chauffage selon la revendication 5,
**caractérisée en ce**
que des éléments de soutien mural (12) sont placés au moins dans les estampages de renforcement (11') étendus horizontalement.

7. Chaudière de chauffage selon l'une des revendications 3 à 6,
**caractérisée en ce**
que la coque de paroi arrière et la coque de paroi avant (6, 7) sont pourvues de prolongements en languette (14) attenants à plat dans le plan médian (E₁) étanches au liquide et que dans ceux-ci des estampages (16) qui entourent des espaces creux de tuyauteries et de bâti (15) sont placés avec des ouvertures de raccord aller (17).

8. Chaudière de chauffage selon la revendication 2,
**caractérisée en ce**
que le brûleur (18) est raccordé étanche au gaz à l'ouverture de l'insert du brûleur (5).

9. Chaudière de chauffage selon l'une des revendications 3 à 8,
**caractérisée en ce**
que des éléments de fixation murale (20) en forme de colliers à accrocher (20') sont placés sur la coque de paroi arrière (6).

10. Chaudière de chauffage selon l'une des revendications 1 à 9,
**caractérisée en ce**
que les poches (2') sont formées en matériau résistant au produit de condensation comme l'acier inoxydable.

11. Chaudière de chauffage selon l'une des revendications 1 à 9,
**caractérisée en ce**
que les parois des poches (2') sont configurées en double couche.

12. Chaudière de chauffage selon l'une des revendications 1 à 11,
**caractérisée en ce**
que les parois de bâti (19) qui délimitent l'espace intérieur conducteur d'eau (I) vers l'extérieur sont formées en tôle d'acier.

13. Chaudière de chauffage selon l'une des revendications 1 à 12,
**caractérisée en ce**
que les raccords aller et retour conducteurs d'eau (21, 22) sont placés sur la face avant de la chaudière.
